# EUROPÄISCHE PATENTANMELDUNG

(11) **EP 2 599 584 A1**
(43) Veröffentlichungstag der Anmeldung: **05.06.2013**
(21) Anmeldenummer: 12187888.8
(22) Anmeldetag: 10.10.2012
(51) Int. Cl.: B23Q 11/00

(54) **Absaugvorrichtung**

(30) Priorität: 29.11.2011 DE 102011087360
(71) Anmelder: HILTI Aktiengesellschaft, 9494 Schaan (LI)
(72) Erfinder: Appel, Hans, 81377 München (DE)

(57) **Zusammenfassung**

Eine Absaugvorrichtung (**20**) für eine bohrende Handwerkzeugmaschine (**1**) hat ein Gehäuse (**21**), einen Anschlussstutzen (**27**), durch welchen längs einer Arbeitsachse (**10**) ein Bohrwerkzeug (**4**) steckbar ist, ein Gebläse (**36**) und einen Sammelbehälter (**26**), in welchen das Gebläse (**30**) staubbeladene Luft von dem Anschlussstutzen (**27**) fördert. Der Sammelbehälter (**26**) enthält eine von dem Gehäuse (**21**) abnehmbare Lade (**40**) und einen Riegel (**44**). Der Riegel ist an der Lade (**40**) oder an dem Gehäuse (**21**) zwischen einer verriegelnden Stellung und einer entriegelten Stellung schwenkbar aufgehängt, wobei der Riegel (**44**) in der verriegelnden Stellung die Lade (**40**) unter einer Vorspannung gegen das Gehäuse (**21**) drückt.

## Beschreibung

### GEBIET DER ERFINDUNG

Die vorliegende Erfindung betrifft eine Absaugvorrichtung für eine bohrende Handwerkzeugmaschine, insbesondere bohrmeißelnde Handwerkzeugmaschine, und ein diesbezügliches Steuerungsverfahren.

### OFFENBARUNG DER ERFINDUNG

Eine Absaugvorrichtung für eine bohrende Handwerkzeugmaschine hat ein Gehäuse, einen Anschlussstutzen, durch welchen längs einer Arbeitsachse ein Bohrwerkzeug steckbar ist, ein Gebläse und einen Sammelbehälter, in welchen das Gebläse staubbeladene Luft von dem Anschlussstutzen fördert. Der Sammelbehälter enthält eine von dem Gehäuse abnehmbare Lade und einen Riegel. Der Riegel ist an der Lade oder an dem Gehäuse zwischen einer verriegelnden Stellung und einer entriegelten Stellung schwenkbar aufgehängt, wobei der Riegel in der verriegelnden Stellung die Lade unter einer Vorspannung gegen das Gehäuse drückt.

Eine Ausgestaltung sieht vor, dass die Lade eine Schale und einen schwenkbaren Deckel aufweist, welcher die Schale entgegen einer Entnahmerichtung verschließt. Der Deckel ist an der dem Gehäuse zugewandten Seite der Schale, wodurch bei angelegter Lade der Deckel die Schale verschließt. Die Schale bleibt ferner durch den Deckel geschlossen, wenn ein Anwender die Lade entnimmt. Der Deckel kann entgegen der Entnahmerichtung gewölbt sein und zu dem Volumen des Sammelbehälters beitragen.

Eine Ausgestaltung sieht vor, zwischen dem Gehäuse und der Lade eine Abdichtung angeordnet ist. Die Abdichtung verringert einen Druckabfall von dem Gebläse bis zu dem Anschlussstutzen. Eine Weiterbildung sieht vor, dass die Abdichtung zwei zueinander längs einer Luftstroms durch die Lade versetzt angeordnete Dichtringe aufweist, welche jeweils den Luftstrom ringförmig umschließen. Ein erster Dichtring umgibt einen Luftfilter und ein zweiter Dichtring umgibt den Deckel.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 ein Bohrhammer und eine Absaugvorrichtung
Fig. 2 einen schematisch Aufbau eines Bohrhammers,
Fig. 3 einen Schnitt durch die Absaugvorrichtung in Ebene III-III von Fig. 1,
Fig. 4 einen Schnitt durch die Absaugvorrichtung in Ebene IV-IV von Fig. 1,
Fig. 5 und 6 eine abgenommene und geöffnete Absaugvorrichtung,
Fig. 7 eine alternative Verriegelung einer Lade,

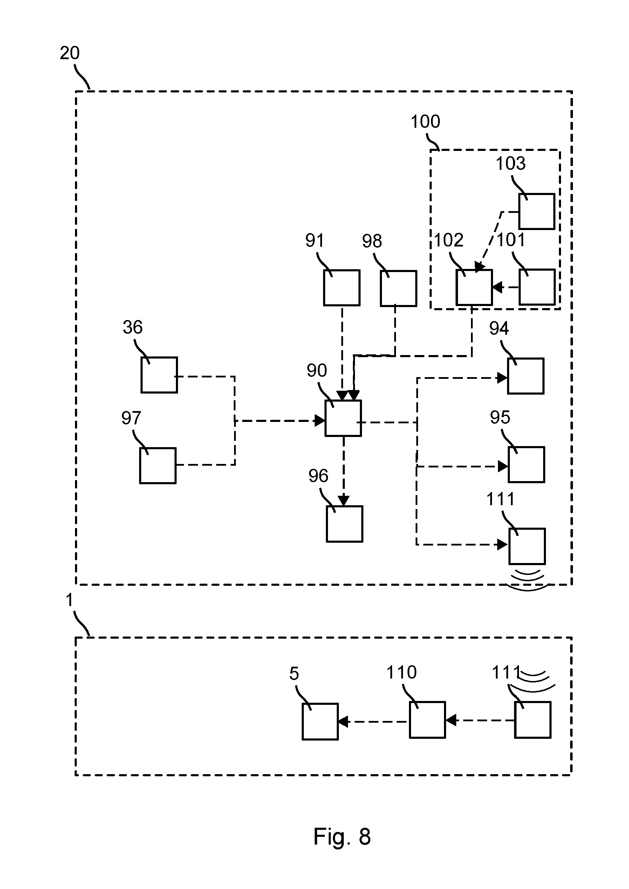

Fig. 8 ein Blockschaltbild einer Betriebsüberwachung,

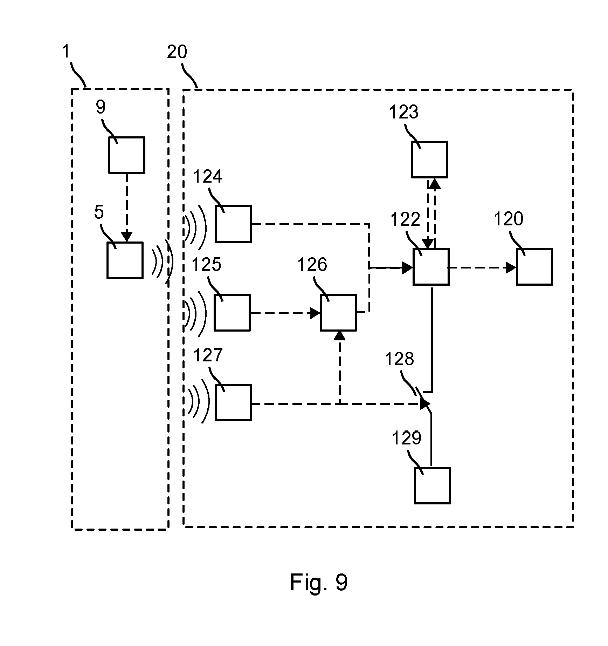

Fig. 9 ein Blockschaltbild einer automatischen Aktivierung der Absaugvorrichtung,

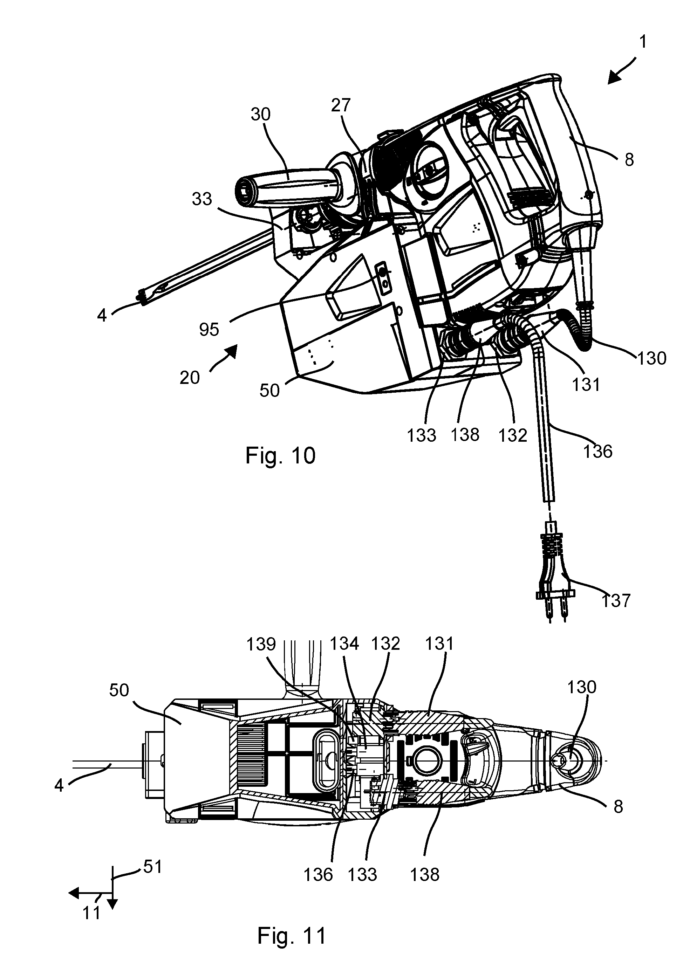

Fig. 10 und Fig. 11 eine steckbare Versorgungsleitung in perspektivischer und einer Schnittansicht,

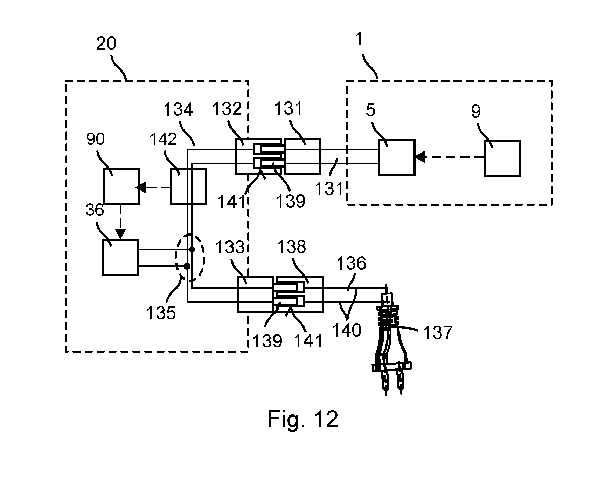

Fig. 12 ein Blockschaltbild der Versorgungsleitung.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

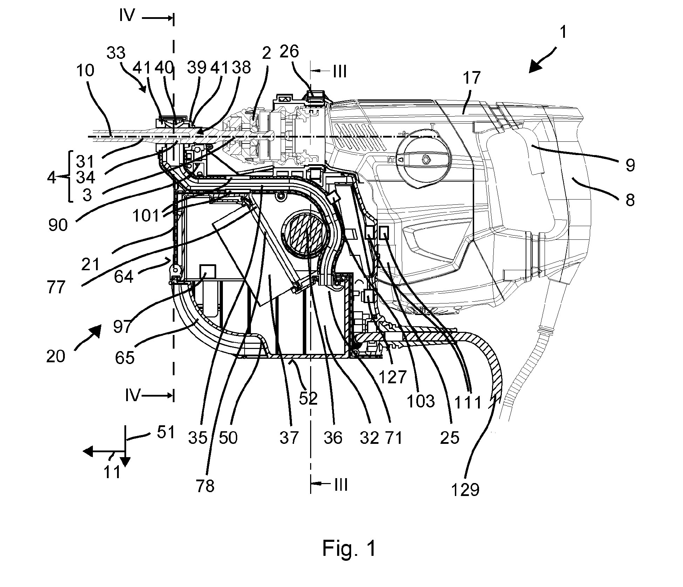

Fig. 1 zeigt eine bohrende Handwerkzeugmaschine **1** mit einer aufgesetzten, abnehmbaren Absaugvorrichtung **20** für Saugbohrer **4.**

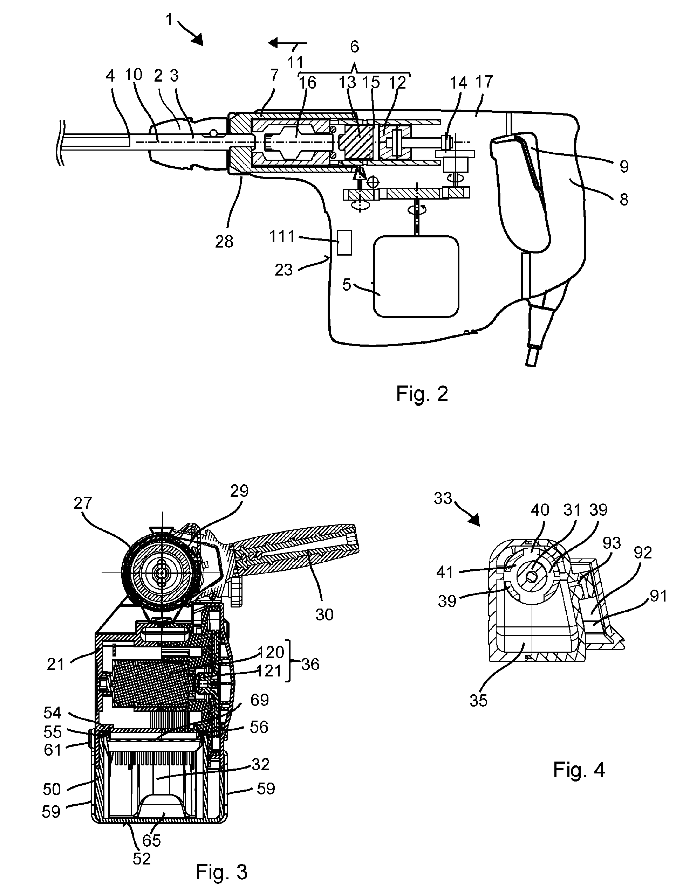

Fig. 2 zeigt als Beispiel für die bohrende Handwerkzeugmaschine detaillierter einen Bohrhammer **1.** Der Bohrhammer **1** hat eine Werkzeugaufnahme **2,** in welche ein Einsteckende **3** eines Bohrers, z.B. eines meißelnden Saugbohrers **4,** eingesetzt werden kann. Einen primären Antrieb des Bohrhammers **1** bildet ein drehender Antriebsmotor **5,** vorzugsweise ein Elektromotor, welcher ein Schlagwerk **6** und eine Abtriebswelle **7** antreibt. Ein Anwender kann den Bohrhammer **1** mittels eines Handgriffs **8** führen und mittels eines Systemschalters **9** den Bohrhammer **1** in Betrieb nehmen. Im Betrieb dreht der Bohrhammer **1** den Saugbohrer **4** kontinuierlich um eine Arbeitsachse **10** und kann dabei den Saugbohrer **4** in Schlagrichtung **11** längs der Arbeitsachse **10** in einen Untergrund schlagen.

Das Schlagwerk **6** ist beispielsweise ein pneumatisches Schlagwerk **6.** Ein Erreger **12** und ein Schläger **13** sind in dem Schlagwerk **6** längs der Arbeitsachse **10** beweglich geführt. Der Erreger **12** ist über einen Exzenter **14** oder einen Taumelfinger an den Antriebsmotor **5** angekoppelt und zu einer periodischen, linearen Bewegung gezwungen. Eine Luftfeder gebildet durch eine pneumatische Kammer **15** zwischen Erreger **12** und Schläger **13** koppelt eine Bewegung des Schlägers **13** an die Bewegung des Erregers **12** an. Der Schläger **13** kann direkt auf ein hinteres Ende des Saugbohrers **4** aufschlagen oder mittelbar über einen im Wesentlichen ruhenden Zwischenschläger **16** einen Teil seines Impuls auf den Saugbohrer **4** übertragen. Das Schlagwerk **6** und vorzugsweise die weiteren Antriebskomponenten sind innerhalb eines Maschinengehäuses **17** angeordnet.

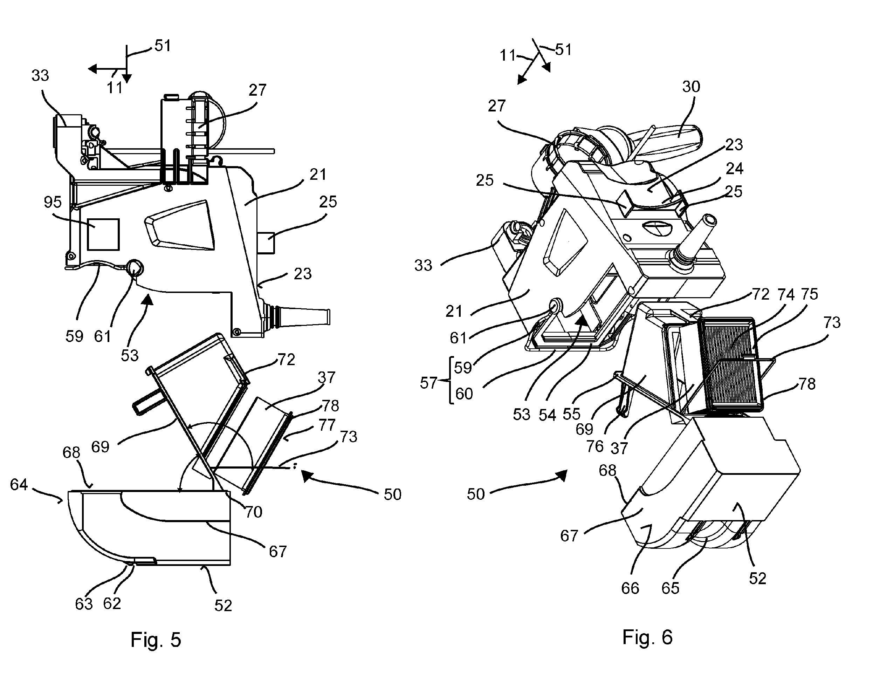

Fig. 1 zeigt die Absaugvorrichtung **20** angelegt und verriegelt an dem Bohrhammer **1,** Fig. 3 zeigt einen Schnitt in der Ebenen III-III und Fig. 4 einen Schnitt in der Ebenen IV-IV. Fig. 5 und Fig. 6 zeigen die Absaugvorrichtung **20** abgenommen von dem Bohrhammer **1** und geöffnet zum Ausleeren von Bohrmehl.

Die Absaugvorrichtung **20** hat ein eigenes Gehäuse **21,** das von dem Maschinengehäuse **17** des Bohrhammers **1** getrennt ist. Die Absaugvorrichtung **20** liegt vorzugsweise mit einer entgegen der Schlagrichtung **11** weisenden Rückseite **22** ihres Gehäuses **21** an einer Vorderseite **23** des Bohrhammers **1** an. Die Anlage ist beispielsweise durch einen konkaven Steg **24** an der Rückseite **22** gebildet. Zwei Flanken 25 des Stegs **24** umgreifen den Bohrhammer **1** an dessen Seitenflächen. Vorzugsweise kann der Steg **24** formschlüssig zu der Vorderseite **23** des Bohrhammers **1** ausgeformt sein.

Eine Verriegelung **26** ermöglicht einem Anwender die Absaugvorrichtung **20** an dem Bohrhammer **1** lösbar zu befestigen bzw. zu entfernen. Die Verriegelung **26** enthält beispielsweise einen Ring **27,** welcher einen Hals **28** des Bohrhammers **1** umschließen kann. Der Ring **27** kann einen eigenen Festklemmmechanismus in Form von Federn, Schraubklemmen etc. enthalten. Bei der beispielhaft dargestellten Ausführungsform ist der Ring **27** mehrfach geschlitzt. Ein Spannband **29** eines Seitenhandgriffs **30** kann den Ring **27** umgreifen und zusammendrücken und somit an dem Hals **28** anklemmen. Die Verriegelung **26** kann beispielsweise auch Zapfen und/oder Ösen an der Rückseite **22** enthalten, die in entsprechend komplementär ausgebildete Gegenstücke am Bohrhammer **1** eingreifen.

Die Absaugvorrichtung **20** saugt Bohrmehl aus dem hohlen Schaft **31** des Saugbohrers **4** in einen Sammelbehälter **32** der Absaugvorrichtung **20** ab. Ein Ansaugstutzen **33** umschließt ringförmig eine Absaugöffnung **34** des Saugbohrers **4.** Ein Luftkanal **35** führt in dem Gehäuse **21** von dem Ansaugstutzen **33** bis zu dem Sammelbehälter **32.** Ein Gebläse **36** ist in Strömungsrichtung hinter dem Sammelbehälter **32** angeordnet. Ein Luftfilter **37** zwischen dem Gebläse **36** und dem Sammelbehälter **32** sorgt für ein Abscheiden von Staubpartikeln in den Sammelbehälter **32.**

Der Ansaugstutzen **33** ist vorzugsweise an den Aufbau der Saugbohrer **4** angepasst. Die Positionierung erfolgt durch das Festlegen der Absaugvorrichtung **20** an dem Bohrhammer **1.** Längs der Arbeitsachse **10** hat der Ansaugstutzen **33** eine feste Position in Bezug auf die Werkzeugaufnahme **2.** Insbesondere ändert sich die Lage des Ansaugstutzens **33** nicht während des Bohrens eines Loches. Eine zu der Arbeitsachse **10** koaxiale Durchgangsöffnung **38** ist in dem Ansaugstutzen **33** beispielsweise durch eine zylindrische Muffe **39** auskleidet. Der Ansaugstutzen **33** ist innen hohl und umgibt die Muffe **39.** Die Muffe **39** hat in einem axial mittleren Bereich einen Innendurchmesser, der größer ist als der Durchmesser der Saugbohrer **4** an der Absaugöffnung **34.** Axial Endstücken **40** der Muffe **39** haben einen verringerten Innendurchmesser gegenüber dem mittleren Bereich. Deren Innendurchmesser ist auf ein Spiel von etwa 1 mm bis 2 mm zu dem Saugbohrer **4** ausgelegt. Der Saugbohrer **4** ist berührungsfrei durch die Muffe **39** geführt. Eine oder mehrere radiale Öffnungen **41** durchbrechen die Muffe **39.** Eine Länge der Muffe **39,** d.h. ihre Abmessung längs der Arbeitsachse **10,** ist etwas größer als eine axiale Bewegungsfreiheit der größten Saugbohrer **4** in der Werkzeugaufnahme **2,** z.B. zwischen 2 cm und 3 cm.

Der starre Luftkanal **35** schließt sich unmittelbar an den Ansaugstutzen **33** an und verläuft geschlossen bis zu dem Sammelbehälter **32.** Der vorzugsweise über seine gesamte Länge geschlossene Luftkanal **35** ist nur an dem Ansaugstutzen **33** und dem Sammelbehälter **32** geöffnet. Ein Querschnitt des Luftkanals **35** ist über dessen Länge vorzugsweise konstant.

Der Sammelbehälter **32** hat eine einschiebbare Lade **50,** welche aus dem Gehäuse **21** herausgenommen werden kann. Die Lade **50** kann in einer Entnahmerichtung **51** herausgezogen werden. Die Entnahmerichtung **51** ist beispielsweise nach unten, d.h. in radialer Richtung weg von der Arbeitsachse **10.** Eine Unterseite **52** des Gehäuses **21** bildet die Lade **50.** Entnommen gibt die Lade **50** eine Öffnung **53** des Gehäuses **21** frei. Die Lade **50** ist komplementär zu der Öffnung **53** ausgebildet. Die Öffnung **53** ist luft- und staubdicht durch die eingesetzte Lade **50** verschlossen. Eine Abdichtung erfolgt unter Anderem durch einen Saum **54** des Gehäuses **21,** welcher die Öffnung **53** ringförmig geschlossen umgibt. Der Saum **54** liegt beispielsweise in einer Ebene senkrecht zur Entnahmerichtung **51.** Die Lade **50** ist mit einem zu dem Saum **54** komplementär ausgebildeten Saum **55** versehen. Die Lade **50** liegt mit ihrem Saum **54** an dem Saum **55** des Gehäuses **21** an, wenn die Lade **50** eingesetzt ist. Der Saum **54** des Gehäuses **21** oder der Saum **55** der Lade **50** ist mit einem Dichtring **56** aus elastischen Material, z.B. Kautschuk oder Schaumstoff versehen.

An dem Gehäuse **21** ist ein schwenkbarer Riegel **57** aufgehängt. Der Riegel **57** ist von einer entriegelten Stellung in Schwenkrichtung **58** in eine verriegelnde Stellung schwenkbar. Die verriegelte Stellung ist in Fig. 3, die entriegelte Stellung in Fig. 5 dargestellt. Der beispielhafte Riegel **57** hat zwei seitliche Schenkel **59** und einen die Schenkel **59** querverbindenden Stab **60.** Die Schenkel **59** sind an Drehlagern **61** am Gehäuse **21** aufgehängt. In der verriegelnden Stellung hintergreift der Riegel **57** mit dem Stab **60** die Unterseite **52** der Lade **50.** In der verriegelten Stellung sind die Schenkel **59** vorwiegend parallel zu der Entnahmerichtung **51** ausgerichtet. Die Abmessung der Schenkel **59** ist so bemessen, dass der Stab **60** den Riegel **57** in der verriegelnden Stellung die Lade **50** an das Gehäuse **21** anpresst. Der beispielhafte Riegel **57** ist teilweise elastisch, z.B. aus Stahl. Ein gekrümmter, z.B. bogenförmiger Verlauf der Schenkel **59** ermöglicht ein elastisches Strecken der Schenkel **59** unter Aufbringen einer Gegenkraft. Der Riegel **57** presst somit die Lade **50** in der verriegelten Stellung entgegen der Entnahmerichtung **51** an das Gehäuse **21.** Die Abdichtung **56** wird durch die Vorspannung in der verriegelten Stellung gequetscht. Die Abdichtung **56** kann aus einem elastischen Material, z.B. Gummi, gebildet sein, welche alternativ oder zusätzlich zu dem federnden Riegel **57** eine Vorspannung in der verriegelten Stellung erzeugt.

Eine Verrastung **62** an der Unterseite **52** hält den Riegel **57** vorzugsweise in der verriegelten Stellung. An der Unterseite **52** der Lade **50** ist eine lokaler dreiecksförmiger Vorsprung **63,** über welchen der Riegel **57,** insbesondere der Querstab **60,** beim Verriegeln geschoben wird. Hierdurch ergibt sich eine Verrastung des Riegels **57** in der verriegelten Stellung.

Die Unterseite **52** der Lade **50** hat eine zu der Vorderseite **64** verlaufende Rille **65.** Die Rille **65** verläuft vorzugsweise über den gesamten Verschwenkweg des Riegels **57,** d.h. von der verriegelten Stellung bis zu der entriegelten Stellung zum Entnehmen der Lade **50.** Der Anwender kann den Riegel **57** in der Rille **65** hintergreifen, um ihn zu verschwenken.

Der Riegel **57** kann anstelle zweier Schenkel **59** mit nur einem Schenkel und einer die Lade **50** untergreifenden Haken versehen sein. Eine alternative Ausgestaltung sieht vor seitlich vorspringende Zapfen an Seitenflächen **66** der Lade **50** vor. Die Riegel **57** hintergreifen diese Zapfen.

In anderen Ausführungen kann die Lade **50** zu einer Seite, d.h. tangential zur Arbeitsachse **10** herausgezogen werden. Der Riegel **57** ist entsprechend um die Arbeitsachse **10** schwenkbar angeordnet und hintergreift in der verriegelten Stellung die Seite der Lade **50.**

Die Lade **50** hat eine Schale **67,** welche an einer Oberseite **68** mit einem schwenkbaren Deckel **69** versehen ist. Die Oberseite **68** weist entgegen der Entnahmerichtung **51.** Die Oberseite **68** liegt bei der eingesetzten Lade **50** an dem Gehäuse **21** an, wodurch der Deckel **69** geschlossen gehalten ist. Der schenkbare Deckel **69** bedeckt vorzugsweise über die Hälfte der Oberseite **68.** Ein verbleibender Teil der Oberseite **68** kann durch einen starren, nicht entfernbaren Deckel **70** verschlossen sein. Der Luftfilter **37** ist in dem schwenkbaren Deckel **69** angeordnet. Eine Öffnung **71** durch die der Luftkanal **35** in die Lade **50** mündet, ist in dem unbeweglichen Deckel **70** angeordnet.

Der Luftfilter **37** ist vorzugsweise aus dem Deckel **69** entnehmbar, um ihn bei Verschmutzung gegen einen unverbrauchten Luftfilter **37** austauschen zu können. Der Luftfilter **37** ist in eine Halterung **72** eingesetzt. Ein verrastbarer und verschwenkbarer Bügel **73** klemmt den Luftfilter **37** in der Halterung **72.** Eine Halterung **72** des Luftfilters **37** hält den Luftfilter **37** vorzugsweise gegenüber der Entnahmerichtung **51** geneigt, vorzugsweise zwischen 30 Grad und 60 Grad geneigt. Der Luftfilter **37** ist vorzugsweise ein Lamellenfilter, dessen gefaltete Lamellen **74** in einem Rahmen **75** eingespannt sind.

Der Luftfilter **37** liegt bei eingesetzter Lade **50** an einer Öffnung des Gehäuses **21** an, welche gleichgroß wie die Frontfläche **77** des Luftfilters **37** ist. Eine die Frontfläche **77** umlaufend geschlossene Dichtlippe **78** dichtet den Luftfilter **37** mit dem Gehäuse **21** ab, wenn die Lade **50** eingesetzt ist. Die Dichtlippe **78** ist vorzugsweise durch den verrasteten Riegel **57** zusammengedrückt. Die Lade **50** ist liegt an dem Gehäuse **21** mit zwei separaten Abdichtungen **56, 78** an. Bei einer Projektion auf eine Ebene senkrecht zur Entnahmerichtung **51** liegt die Dichtlippe **78** innerhalb des Dichtrings **56.** Längs eines Luftstroms durch die Lade **50** ist der Dichtring **56** versetzt zu der Dichtlippe **78** angeordnet. Beide Abdichtungen umschließen jeweils ringförmig den Luftstrom.

Der Deckel **69** trägt zwischen 20 % und 40 % zu dem Volumen des Sammelbehälters **32** bei. Der Deckel **69** hat beispielsweise eine prismatische Form, welche zu der Schale **67** hin offen ist. Der Deckel **69** ist von der Schale **67** weg gewölbt, d.h. entgegen der Entnahmerrichtung **51.** Ein saumförmiger Rand **55** des Deckels liegt bei geschlossener Lade **50** an der Schale **67** auf. Ein oder mehrere Verrastungsnasen **76** an dem Deckel **69** oder der Schale **67** können diese zusammenhalten.

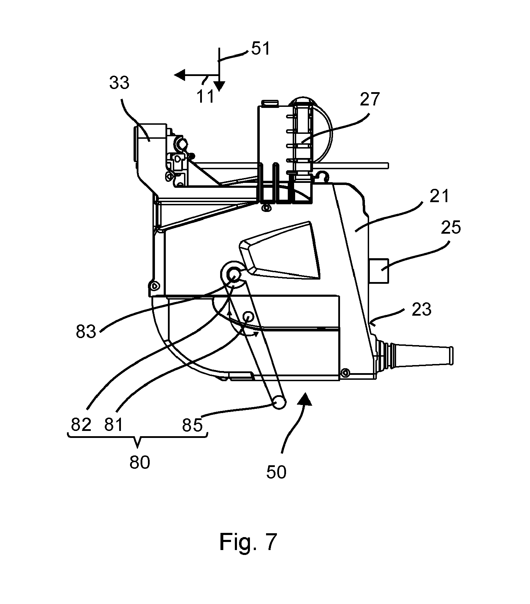

Eine andere Ausgestaltung sieht vor, einen Riegel **80** mit Drehlagern **81** an den Seitenflächen **67** der Lade **50** schwenkbar zu lagern (Fig. 7). Der Riegel **80** hat einen Haken **82,** der einen Zapfen **83** an dem Gehäuse **21** zum Verriegeln der Lade **50** hintergreifen kann. Der Haken **82** ist an seinem in Schwenkrichtung **84** vorderen Ende in Richtung zu dem Drehlager **81** hin gekrümmt. Der geringere Abstand des vorderen Endes bewirkt ein Einrasten des Hakens **82** an dem Zapfen **83.** Ein Querstab **85** kann die beiden Riegel **80** verbinden. Der Abstand zwischen dem Drehlager **81** und dem Haken **82** ist etwas kürzer dimensioniert als ein Abstand des Drehlagers **81** von dem Zapfen **83,** wenn die Lade **50** an dem Gehäuse **21** ohne Druck anliegt. Der relativ verkürzte Abstand bewirkt eine Vorspannung der Lade **50** gegen das Gehäuse **21,** wenn der Riegel **80** eingerastet ist.

Eine Überwachung **90** prüft die ordnungsgemäße Funktion der Absaugvorrichtung **20.** Ein Drucksensor **91** ist in dem Ansaugstutzen **33** angeordnet. Der Drucksensor **91** erfasst vorzugsweise einen Druckunterschied zwischen dem Inneren der Muffe **39** und dem Umgebungsdruck. Beispielsweise ist der Drucksensor **91** als Membransensor oder piezoresistiver Drucksensor aufgebaut. Der Drucksensor **91** ist in einer zu der Muffe **39** und dem Luftkanal **35** versetzt angeordneten Kammer **92** untergebracht. Die Kammer **93** hat vorzusweise nur eine Öffnung, welche über einen Kanal **93** mit dem Luftkanal **35** nahe der Muffe **39,** z.B. in einem Abstand von weniger als 2 cm, verbunden ist. Ein Luftaustausch zwischen der Kammer **93** und dem Luftkanal **35** ist daher sehr gering. Zusätzlich kann der Kanal **93** einen gegenüber dem Luftkanal **35** deutlich geringeren Querschnitt aufweisen. Bei einer Ausführung ist der Drucksensor **91** ausgelegt den absoluten Luftdruck in der Kammer **93** zu bestimmen. Alternativ kann ein zu der Umgebung relativer Druck durch den Drucksensor **91** bestimmt werden. Der Drucksensor **91** kann hierzu eine weitere Öffnung der Kammer zu der Umgebung verschließen, um mit dem Referenzdruck beaufschlagt zu sein.

Der Druck innerhalb der Muffe **39** bzw. dem Ansaugstutzen **33** soll bei der Ausführung wenigstens 12 mBar geringer als der Umgebungsdruck sein. Andere Schwellwerte für den Druckunterschied können im Bereich zwischen 10 mBar und 20 mBar liegen. Unterschreitet der Druckunterschied den Schwellwert wird dem Anwender eine Fehlfunktion signalisiert, z.B. wird ein akustischer Signalgeber **94** oder eine Signallampe **95** aktiviert. Die Überwachung **90** zeigt vorzugsweise eine Fehlfunktion nur an, wenn der geringe Druckunterschied bei einem laufenden Gebläse **36** und für eine Mindestdauer auftritt. Beispielsweise wird die Überwachung **90** zusammen mit dem Gebläse **36** aktiviert und deaktiviert. Die deaktivierte Überwachung **90** erfasst vorzugsweise keine neue Fehlfunktion, kann aber beispielsweise eine vorhergehend erfasste Fehlfunktion weiterhin anzeigen. Das Fehlersignal wird dazu in einem Datenspeicher **96** abgelegt. Ferner kann bei einer nachfolgenden in Betriebnahme der Datenspeicher **96** ausgelesen und ggf. erneut die Fehlfunktion angezeigt werden. Die Überwachung **90** wird beispielsweise durch Entnehmen des Sammelbehälters **32** zurückgesetzt, wodurch das Fehlersignal gelöscht wird und die Signallampe **95** erlischt. Ein Sensor **97,** z.B. ein elektrischer Taster, erfasst die Entnahme des Sammelbehälters **32.**

Der weiterer Drucksensor **98** kann innerhalb des Luftkanals **35** angeordnet werden, beispielsweise an dem Sammelbehälter **32** nahen Ende des Luftkanals **35.** Der Schwellwert für diesen Drucksensor ist höher angesetzt, beispielsweise im Bereich zwischen 25 mBar und 35 mBar.

Ein kapazitativer Sensor **100** ist an dem Luftkanal **35** angeordnet. Der Sensor **100** kann beispielsweise zwei gegenüberliegende Plattenelektroden **101** enthalten, welche durch den Luftkanal **35** voneinander isoliert sind. Eine Auswertung **102** ermittelt die elektrische Kapazität zwischen den Elektroden **101.** Die Auswertung **102** enthält beispielsweise einen elektrischen Schwingkreis, dessen Resonanzfrequenz durch die Kapazität festgelegt wird. Eine Frequenzabtastung des Schwingkreises ermittelt ein Maß für die Kapazität. Die Kapazität selbst wird herangezogen, um den Staubgehalt in der angesaugten Luft zu bestimmen. Die Auswertung **102** vergleicht den Staubgehalt mit einem Schwellwert. Überschreitet der Staubgehalt den Schwellwert wird der Anwender vor einem Verstopfen des Saugbohrers **4** gewarnt. Die Auswertung **102** kann beispielsweise den akustischen oder optischen Signalgeber **94, 95** der Überwachung **90** aktivieren. Ein piezoelektrischer Sensor **103** kann beispielsweise an einer Krümmung des Luftkanals **35** angeordnet sein. Die schwereren Staubteilchen schlagen an dem Sensor **103** auf. Eine Rate der Einschläge ist ein Maß für den Staubtransport, welcher der Auswertung **102** zugeleitet werden kann. Die Auswertung **102** kann durch einen Mikroprozessor oder als analoge Schaltung implementiert sein.

Eine Weiterbildung sieht vor, dass die Überwachung **90** mit dem Bohrhammer **1** kommuniziert. Der Bohrhammer **1** hat eine Abschaltautomatik **110,** welche ansprechend auf ein Fehlersignal der Überwachung **90** den Antriebsmotor **5** deaktiviert oder ansprechend auf die Auswertung **102** eine Abbauleistung durch Absenken einer Drehzahl des Antriebsmotors **5** verringert. Die Kommunikation erfolgt vorzugsweise drahtlos, z.B. über einen induktiven Transmitter **111,** welcher an den einander berührenden Abschnitten der Gehäuse **17, 21** angeordnet ist.

Das Gebläse **36** hat einen Lüftermotor **120,** vorzugsweise ein Elektromotor, und ein Lüfterrad **121.** Der Lüftermotor **120** treibt das Lüfterrad **121** an, welches Luft durch den Luftfilter **37** und den Luftkanal **35** ansaugt. Eine Steuerung **122** der Absaugvorrichtung **20** aktiviert den Lüftermotor **120,** wenn ein Anwender den Bohrhammer **1** mit dem Systemschalter **9** in Betrieb nimmt. Die Steuerung **122** schaltet weiters die Absaugvorrichtung **20** ab, wenn der Anwender den Bohrhammer **1** außer Betrieb nimmt. Das Abschalten kann verzögert erfolgen, indem die Steuerung **122** zunächst einen Zeitgeber **123** aktiviert, wenn der Anwender den Bohrhammer **1** abschaltet. Nach Ablauf einer durch den Zeitgeber **123** vorgegebenen Zeitspanne schaltet die Steuerung **122** die Absaugvorrichtung **20** ab. Die Zeitspanne liegt vorzugsweise im Bereich von 2 Sekunden bis 20 Sekunden. Die Zeitspanne erweist sich als ausreichend verbleibenden Staub aus dem Hohlrohr des Saugbohrers zu saugen. Eine längere Zeitspanne führt in der Regel zu keinem besseren Ergebnis, da die Anwender den Saugbohrer inzwischen aus dem Bohrloch entfernen und verbleibender Staub aus dem Hohlrohr entfernt ist.

Die Steuerung **122** des Gebläses **36** ist an einen Sensor **124** angeschlossen, welcher das von dem Antriebsmotor **5** erzeugte statische Magnetfeld erfasst. Der Antriebsmotor **5** ist beispielsweise ein Universalmotor, der ohne Permanentmagnete stehend kein Magnetfeld und im Betrieb aufgrund der stromdurchflossenen Magnetspulen ein Magnetfeld erzeugt. Der Sensor **124** ist beispielsweise ein Reedschalter, welcher auf die Magnetfeldstärke anspricht. Bei einer einfachen Ausgestaltung wechselt der Sensor **124** diskret zwischen zwei Zuständen, wobei ein Zustand einem abwesenden oder schwachen Magnetfeld des stehenden Antriebsmotors **5** und ein anderer Zustand dem stärken Magnetfeld des drehenden Antriebsmotors **5** zugeordnet ist. Ein Schwellwert für das Magnetfeld ist durch den mechanischen Aufbau des Reedschalters vorgegeben. Eine andere Ausgestaltung nutzt einen Hallsensor als Sensor **124,** dessen Ausgangssignal ein Maß für die Magnetfeldstärke ist. Die Steuerung **122** diskriminiert das an sie übermittelte Ausgangssignal mittels eines Schwellwertes. Die Absaugvorrichtung **20** ist aufgrund ihrer mechanischen Verriegelung **26** typischerweise an ein oder wenige Modelle von Bohrhämmern **1** oder anderen Handwerkzeugmaschinen angepasst. Der Reedsensor bzw. der Schwellwert sind bei der Absaugvorrichtung **20** für die jeweilige Modeltypen und der enthaltenen Antriebsmotoren **5** angepasst. Modeltypen mit einem Gleichstrommotor enthalten Permanentmagnete, welche auch im stehenden Betrieb des Antriebsmotors **5** ein Magnetfeld erzeugen. Der drehende Antriebsmotor **5** hat ein stärkeres Magnetfeld. Beide Magnetfeldstärken sind für einen Modeltyp charakteristisch, der Schwellwert ist ein Wert zwischen den Magnetfeldstärken.

Eine weitere Ausgestaltung sieht vor einen Sensor **125** zu verwenden, der auf das magnetische Wechselfeld des Antriebsmotors **5** anspricht. Der stehende Antriebsmotor **5** strahlt kein Wechselfeld, sondern erzeugt ggf. nur statisches Magnetfeld. Der Sensor 125 ist beispielsweise ein Hallsensor, der die Magnetfeldstärke oder ein der Magnetfeldstärke proportionales Signal ermittelt. Ein Hochpassfilter **126** mit beispielsweise einer Grenzfrequenz von 500 Hz filtert niederfrequente Signalanteile aus. Die charakteristisch für das Drehen des Antriebsmotor **5** ausgehenden Wechselfelder liegen bei den verwendeten Antriebsmotoren oberhalb von 2000 Hz. Das gefilterte Signal zugehörig zu einem stehenden Antriebsmotor **5** sollte unabhängig von seiner Bauweise etwa Null sein. Das gefilterte Signal wird der Steuerung **122** zugeführt. Die Steuerung **122** diskriminiert eine Amplitude des gefilterten Signals an einem Schwellwert. Die Steuerung **122** schaltet den Lüftermotor **120** an, wenn das gefilterte Signal den Schwellwert übersteigt. Die Steuerung **122** schaltet den Lüftermotor **120** ab, wenn das gefilterte Signal den Schwellwert unterschreitet oder auf Null abfällt. Bei einer Ausgestaltung aktiviert die Steuerung **122** den Zeitgeber **123,** wenn der Schwellwert unterschritten wird. Der Zeitgeber **123** verzögert das Abschalten des Lüftermotors **120.**

Eine weitere Ausgestaltung enthält eine Aufnehmerspule **127.** Die Aufnehmerspule **127** ist in dem Gehäuse **21** derart angeordnet, dass bei der an dem Bohrhammer **1** angelegten Absaugvorrichtung **20** die Aufnehmerspule **127** nahe dem Antriebsmotor **5** ist. Eine Achse der Aufnehmerspule **127** ist ferner parallel zu der Drehachse des Antriebsmotors **5.** Das Wechselfeld des Antriebsmotors **5** induziert einen Strom in der Aufnehmerspule **127.** Der Strom kann als Signal dem Hochpassfilter **126** zugeführt werden. Die Auswertung erfolgt analog dem Signal des oben beschriebenen Hallsensors **124.** Der in der Aufnehmerspule **127** induzierte Strom ist ausreichend die elektrische Schaltung der Steuerung **122** zu aktivieren. Beispielsweise kann der Strom einen Schalter **128** betätigen, der die Steuerung **122** mit einer Energieversorgung **129,** insbesondere mit einem Batteriefach koppelt. Der Schalter **128** ist beispielsweise als bistabiles Relais ausgebildet. Beim Deaktivieren des Lüftermotors **120** wird das Relais zurückgesetzt.

Eine Stromversorgung des Bohrhammers **1** und der Absaugvorrichtung **20** erfolgt beispielsweise über einen gemeinsamen Netzanschluss **129.** Der Bohrhammer **1** hat ein kurzes Anschlusskabel **130,** welches an einem Ende innerhalb des Bohrhammers **1** dauerhaft befestigt und umverdrahtet ist. Ein anderes Ende des Anschlusskabels **130** ist außerhalb des Bohrhammers **1** zugänglich und mit einem Stecker **131** versehen. Das Anschlusskabel **130** hat eine Länge von weniger als 20 Zentimeter. An der Absaugvorrichtung **20** ist eine Buchse **132** vorgesehen, welche komplementär zu dem Stecker **131** des Bohrhammers **1** ist. Das kurze Anschlusskabel **130** kann elektrisch mittels des Steckers **131** mit der Absaugvorrichtung **20** verbunden werden. An der Absaugvorrichtung **20** ist ferner ein Stecker **133** vorgesehen, welcher identisch zu dem Stecker **131** des Bohrhammers **1** ist. Eine elektrische Leitung **134** innerhalb der Absaugvorrichtung **20** verbindet die Buchse **132** mit dem Stecker **133.** Ein Abgriff **135** an der elektrischen Leitung **134** versorgt das Gebläse **36** und andere elektrische Komponenten mit Strom. Ein Netzkabel **136** ist an einem Ende mit einem Stecker **137** entsprechend landestypischer elektrischer Hausanschlüsse versehen. An dem anderen Ende ist eine Buchse **138** gleich der Buchse **132** befestigt. Ein Anwender kann wahlweise das Netzkabel **136** mit dem kurzen Anschlusskabel **130** verbinden, falls die Verwendung der Absaugvorrichtung **20** nicht gewünscht ist. Anderenfalls kann der Anwender das Netzkabel **136** mit der Absaugvorrichtung **20** und den Bohrhammer **1** mittels des kurzen Anschlusskabels **130** verbinden, um beide Geräte mit Strom zu versorgen. Das Netzkabel **136** hat vorzugsweise eine Länge von wenigstens 1,5 Metern.

Die Stecker **131, 133** haben vorstehende stiftförmige elektrische Kontakte **139,** welche mit den stromführenden Litzen **140** verbunden sind. Bei einer einphasiger Stromversorgung haben die Stecker zwei stiftförmige elektrische Kontakte **139** für den Außenleiter und den Neutralleiter. Weiters kann noch ein Kontakt für den Schutzleiter vorgesehen sein. Die Buchsen **132, 138** haben zwei hülsenförmige Kontakte **141,** in welche die stiftförmigen Kontakte **139** des Steckers **131, 138** eingeschoben werden. Die hülsenförmigen Kontakte **141** sind von außen vorzugsweise nicht greifbar oder elektrisch isoliert.

Die Buchse **132** und der Stecker **133** sind frei zugänglich an dem Gehäuse **21** der Absaugvorrichtung **20** angebracht. Die Buchse **132** und der Stecker **133** sind beispielsweise in einem unteren Bereich an der Rückseite **23** vorgesehen, welcher nicht als Anlagefläche an dem Bohrhammer **1** vorgesehen ist. Der Anwender kann die elektrischen Steckverbindungen unabhängig, ob die Absaugvorrichtung **20** an dem Bohrhammer **1** angelegt ist, lösen oder verbinden.

Ein Stromsensor **142** kann den Stromfluss durch die elektrische Leitung **134** erfassen. Beispielsweise kann der Stromsensor **142** einen Spannungssensor enthalten, welcher den Spannungsabfall zwischen Stecker **133** und Buchse **132** der Absaugvorrichtung **20** misst. Wenn der Anwender den Bohrhammer **1** in Betrieb nimmt erhöht sich der Stromfluss. Die Steuerung **90** greift die Signale des Stromsensors **142** ab und schaltet das Gebläse **36** automatisch ein, wenn der Stromfluss einen Schwellwert überschreitet.

## Patentansprüche

1. Absaugvorrichtung **(20)** für eine bohrende Handwerkzeugmaschine (1) mit
einem Gehäuse **(21),**
einem Anschlussstutzen **(33),** durch welchen längs einer Arbeitsachse (10) ein Bohrwerkzeug **(4)** steckbar ist,
einem Gebläse **(30),**
einem Sammelbehälter **(32),** in welchen das Gebläse **(30)** staubbeladene Luft von dem Anschlussstutzen **(33)** fördert, wobei der Sammelbehälter **(32)** eine von dem Gehäuse **(21)** abnehmbare Lade **(50)** enthält und
einem Riegel **(57; 80),** welcher an der Lade **(50)** oder an dem Gehäuse **(21)** zwischen einer verriegelnden Stellung und einer entriegelten Stellung schwenkbar aufgehängt ist, wobei der Riegel **(57; 80)** in der verriegelnden Stellung die Lade **(50)** unter einer Vorspannung gegen das Gehäuse **(21)** drückt.

2. Absaugvorrichtung **(20)** nach Anspruch 1, **dadurch gekennzeichnet, dass** der Riegel **(57; 80)** in der verriegelnden Stellung eine Anpresskraft auf die Lade **(50)** in Richtung zu dem Gehäuse **(21)** ausübt.

3. Absaugvorrichtung **(20)** nach Anspruch 1 oder 2, **dadurch gekennzeichnet, dass** die Lade **(50)** eine Schale **(67)** und einen schwenkbaren Deckel **(69)** aufweist, welcher die Schale **(50)** entgegen einer Entnahmerichtung **(51)** verschließt.

4. Absaugvorrichtung **(20)** nach Anspruch 3, **dadurch gekennzeichnet, dass** der Deckel **(69)** entgegen der Entnahmerichtung **(51)** gewölbt und zu dem Volumen innerhalb des Sammelbehälters **(32)** beiträgt.

5. Absaugvorrichtung **(20)** nach einem der vorhergehenden Ansprüche, **dadurch gekennzeichnet, dass** zwischen dem Gehäuse **(21)** und der Lade **(50)** eine Abdichtung **(56, 78)** angeordnet ist.

6. Absaugvorrichtung **(20)** nach Anspruch 5, **dadurch gekennzeichnet, dass** die Abdichtung **(56, 78)** zwei zueinander längs einer Luftstroms durch die Lade **(50)** versetzt angeordnete Dichtringe **(56, 78)** aufweist, welche jeweils den Luftstrom ringförmig umschließen.

7. Absaugvorrichtung **(20)** nach einem der vorhergehenden Ansprüche, **dadurch gekennzeichnet, dass** der Riegel **(57; 80)** in der verriegelnden Stellung verrastet.

8. Absaugvorrichtung **(20)** nach einem der vorhergehenden Ansprüche, **dadurch gekennzeichnet, dass** der Anschlussstutzen **(33)** gegenüber einem Gehäuse **(21)** der Absaugvorrichtung **(20)** unbeweglich ist.

9. Absaugvorrichtung **(20)** nach einem der vorhergehenden Ansprüche, **gekennzeichnet durch** ein Gehäuse **(21),** welches mittels einer lösbaren Verriegelung **(26)** an einer Handwerkzeugmaschine **(1)** befestigbar ist.
